# EUROPEAN PATENT APPLICATION

(11) **EP 4 552 828 A1**
(43) Date of publication of application: **14.05.2025**
(21) Application number: 23834876.7
(22) Date of filing: 05.07.2023
(51) Int. Cl.: B29C 64/209, B29C 64/20, B29C 64/118, B29C 64/227, B29C 64/236, B29C 64/241, B29C 64/393, B29C 64/321, B33Y 10/00, B33Y 30/00, B33Y 50/00

(54) **3D PRINTING APPARATUS AND METHOD**

(30) Priority: 05.07.2022 CN 202210783853
(71) Applicant: Suzhou Meaman Machines Co., Ltd., Suzhou, Jiangsu 215400 (CN)
(72) Inventor: HUANG, Weidong, Suzhou, Jiangsu 215400 (CN)
(74) Representative: Winter, Brandl - Partnerschaft mbB
(86) International application number: PCT/CN2023/105808
(87) International publication number: WO 2024/008109

(57) **Abstract**

The present application provides a 3D printing apparatus and method. The apparatus includes: a material extrusion portion, including a material accommodation chamber and an extrusion outlet in communication with the material accommodation chamber, where the material accommodation chamber is configured to accommodate a molten material, and the extrusion outlet is configured to extrude the molten material to a current printing layer; and a switch assembly, coupled to the extrusion outlet, where the switch assembly is configured to perform on-off control on an area at which the extrusion outlet is located, so as to form a plurality of sub-extrusion outlets with continuously adjustable widths. Through such an arrangement, the molten material may be caused to pass through the plurality of sub-extrusion outlets to fill and print the current printing layer including the plurality of partitions at one time, thereby further improving printing efficiency while ensuring printing accuracy.

## Description

The present application claims priority to Chinese Patent Application No. 2022107838531, filed with the China National Intellectual Property Administration on July 5, 2022 and entitled "3D PRINTING APPARATUS AND METHOD", which is incorporated herein by reference in its entirety.

### TECHNICAL FIELD

The present application relates to the field of 3D printing, and specifically, to a 3D printing apparatus and method.

### BACKGROUND

A material extrusion-based 3D printing technology, such as a fused deposition modeling (fused deposition modeling, FDM) technology, which is a commonly used 3D printing technology, usually requires heating a material to a molten state (or semi-fluid state) and extruding the molten material from an extrusion outlet of a 3D printing apparatus onto a build platform, so that the material is deposited layer by layer on the build platform and solidified together to form a 3D print.

In a conventional material extrusion-based 3D printing technology, the 3D printing apparatus is usually provided with an extrusion outlet with a fixed diameter. Such a printing apparatus cannot balance printing accuracy and printing efficiency. Some improvements have been made to such a printing apparatus in the related technology so that both printing efficiency and printing accuracy are considered. However, there is still room for further improvement in printing efficiency of the improved 3D printing apparatus.

### SUMMARY

The present application provides a 3D printing apparatus and method, to further improve printing efficiency while ensuring printing accuracy.

According to a first aspect, a 3D printing apparatus is provided that includes: a material extrusion portion, including a material accommodation chamber and an extrusion outlet in communication with the material accommodation chamber, where the material accommodation chamber is configured to accommodate a molten material, and the extrusion outlet is configured to extrude the molten material to a current printing layer; and a switch assembly, coupled to the extrusion outlet, where the switch assembly is configured to perform on-off control on an area at which the extrusion outlet is located to form a plurality of sub-extrusion outlets with continuously adjustable widths, the plurality of sub-extrusion outlets are configured to simultaneously print a plurality of partitions in the current printing layer, and in a process of printing the plurality of partitions by using the plurality of sub-extrusion outlets, a width of each of the plurality of sub-extrusion outlets is changed with change of a contour line of a partition corresponding to the sub-extrusion outlet, so that the molten material is filled into the partition corresponding to the sub-extrusion outlet at one time.

According to a second aspect, a 3D printing apparatus is provided that includes: a material extrusion portion, including a material accommodation chamber and an extrusion outlet, where the material accommodation chamber is configured to accommodate a molten material, the extrusion outlet includes a plurality of channels in communication with the material accommodation chamber, the plurality of channels are configured to extrude the molten material to a current printing layer, and materials extruded from adjacent channels in the plurality of channels are fused together in the current printing layer; and a switch assembly, coupled to the plurality of channels, where the switch assembly is configured to perform on-off control on the plurality of channels to form a plurality of sub-extrusion outlets with continuously adjustable widths.

According to a third aspect, a 3D printing method is provided that includes: conveying a molten material to an extrusion outlet, to print a current printing layer; and during a process of printing the current printing layer, performing on-off control on an area at which the extrusion outlet is located by using a switch assembly, to form a plurality of sub-extrusion outlets with continuously adjustable widths, the plurality of sub-extrusion outlets are configured to simultaneously print a plurality of partitions in the current printing layer, and in a process of printing the plurality of partitions by using the plurality of sub-extrusion outlets, a width of each of the plurality of sub-extrusion outlets is changed with change of a contour line of a partition corresponding to the sub-extrusion outlet, so that the molten material is filled into the partition corresponding to the sub-extrusion outlet at one time.

According to a fourth aspect, a 3D printing method is provided that includes: conveying a molten material to an extrusion outlet, to print a current printing layer by using a plurality of channels in the extrusion outlet, where materials extruded from adjacent channels in the plurality of channels are fused together in the current printing layer; and during a process of printing the current printing layer, performing on-off control on the plurality of channels by using a switch assembly to form a plurality of sub-extrusion outlets with continuously adjustable widths.

The 3D printing apparatus provided in embodiments of the present application is provided with a switch assembly coupled to an extrusion outlet, and the switch assembly can perform on-off control on an area at which the extrusion outlet is located, to form a plurality of sub-extrusion outlets with continuously adjustable widths. Through such an arrangement, the molten material may be caused to pass through the plurality of sub-extrusion outlets to fill and print the current printing layer including the plurality of partitions at one time, thereby further improving printing efficiency while ensuring printing accuracy.

### BRIEF DESCRIPTION OF THE DRAWINGS

FIG. 1 is a schematic diagram of a structure of a printing layer according to an embodiment of the present application.
FIG. 2 is a schematic diagram of a structure of a 3D printing apparatus according to an embodiment of the present application.
FIG. 3 is a schematic diagram of a structure of the 3D printing apparatus in FIG. 2 in another printing state.
FIG. 4 is a schematic diagram of a structure of another 3D printing apparatus according to an embodiment of the present application.
FIG. 5 is a schematic diagram of a structure of the 3D printing apparatus in FIG. 4 in another printing state.
FIG. 6 is a schematic diagram of a structure of a 3D printing apparatus according to an embodiment of the present application during printing of the printing layer shown in FIG. 1.
FIG. 7 is a schematic top view of a structure of a 3D printing apparatus according to an embodiment of the present application.
FIG. 8 is a schematic top view of a structure of another 3D printing apparatus according to an embodiment of the present application.
FIG. 9 is a schematic diagram of a structure of a switch assembly in a 3D printing apparatus according to an embodiment of the present application.
FIG. 10 is a schematic diagram of a structure of a switch assembly in another 3D printing apparatus according to an embodiment of the present application.
FIG. 11 is a schematic diagram of a structure of a switch assembly in still another 3D printing apparatus according to an embodiment of the present application.
FIG. 12 is a schematic diagram of a structure of another 3D printing apparatus according to an embodiment of the present application.
FIG. 13 is a schematic diagram of a structure of a switch assembly in still another 3D printing apparatus according to an embodiment of the present application.
FIG. 14 is a schematic flowchart of a 3D printing method according to an embodiment of the present application.
FIG. 15 is a schematic flowchart of another 3D printing method according to an embodiment of the present application.

### DETAILED DESCRIPTION OF THE EMBODIMENTS

The following clearly and completely describes technical solutions in embodiments of the present application with reference to accompanying drawings in embodiments of the present application. Apparently, the described embodiments are some but not all of the embodiments of the present application. It should be understood that same or similar reference numerals are used in the drawings to indicate same or similar components.

In a material extrusion-based 3D printing technology (for example, FDM technology), a 3D printing apparatus can adapt to a wide variety of printing materials, and has a large range of sizes for printable prints, making it widely applied in the field of 3D printing. Such a 3D printing apparatus needs to extrude a molten material through an extrusion outlet (or discharge outlet) of the 3D printing apparatus onto a build platform, so that the molten material is deposited layer by layer on the build platform and solidified to form a 3D print. Therefore, the 3D printing apparatus usually needs to print the 3D print in layers.

Generally, when each layer is printed by using the 3D printing apparatus, it is equivalent to filling a filling area of each layer. Because a conventional 3D printing apparatus is usually provided with an extrusion outlet with a fixed diameter, when the printing apparatus is used to print one of a plurality of layers, it is usually necessary to divide a filling area of the layer into a plurality of closely arranged passes (a size of each pass matches the diameter of the extrusion outlet), and control the printing apparatus to fill the plurality of passes in sequence according to a specific order. In other words, when the printing apparatus is used to print one of the layers, a plurality of round trips are generally required for completing filling of a filling area of the layer.

If the diameter of the extrusion outlet of the 3D printing apparatus is smaller, an amount of material extruded within a unit time is smaller, and more passes thus need to be filled during printing of one of the layers. As a result, printing accuracy is higher, but printing efficiency is lower. On the contrary, if the diameter of the extrusion outlet of the 3D printing apparatus is larger, an amount of material extruded within a unit time is larger, and fewer passes thus need to be filled during printing of one of the layers Thus, the printing efficiency is higher, but the printing accuracy is lower. Therefore, the conventional 3D printing apparatus cannot balance printing accuracy and printing efficiency.

In order to meet an industrial demand for high-efficiency and high-precision printing, a feasible implementation is to develop an extrusion outlet of the 3D printing apparatus into an extrusion outlet with a variable width. An extrusion outlet of such a 3D printing apparatus is featured by a one-dimensional strip, that is, a width of the extrusion outlet in a dimension is much greater than a width of the extrusion outlet in another dimension, and the width of the extrusion outlet in the dimension may vary with the change of a contour line of a filling area of a current printing layer, to form an extrusion outlet with a variable width. For a detailed description of this implementation, for example, reference may be made to PCT/CN2017/083647 and PCT/CN2020/120405.

Because the width of the extrusion outlet in the improved 3D printing apparatus is variable, when the printing layer is a single connected area, the 3D printing apparatus can be used to completely fill or partially fill the entire printing layer at one time, thereby balancing both printing accuracy and printing efficiency.

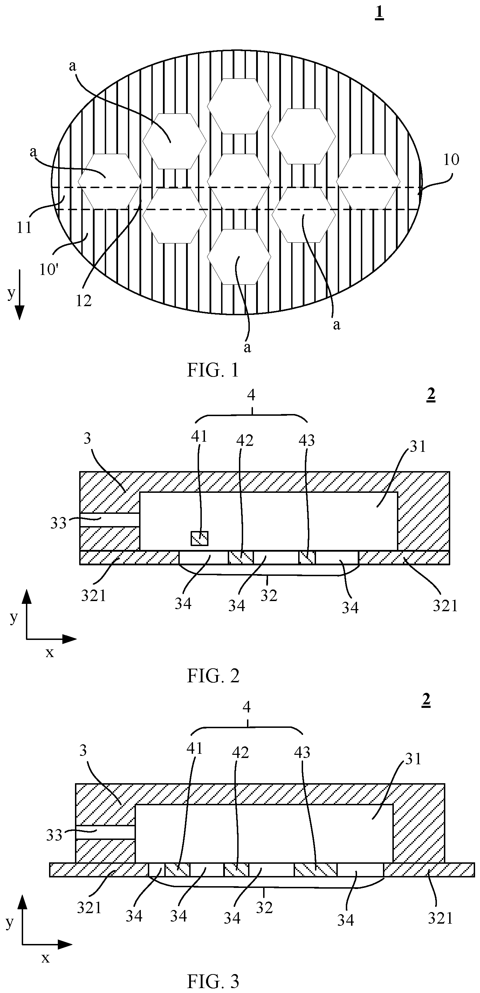

However, for some 3D prints with complex structures (for example, 3D prints with hollow structures), printing efficiency is still low when carrying out printing by using the foregoing improved 3D printing apparatus. This is exemplarily and briefly described below with reference to FIG. 1.

As previously described, a 3D print may have a plurality of printing layers. FIG. 1 shows one of the plurality of printing layers. As shown in FIG. 1, the printing layer 1 has a plurality of hollow areas a. When the improved 3D printing apparatus is used to print the printing layer shown in FIG. 1, the 3D printing apparatus needs to perform reciprocating motion along a printing direction y shown in FIG. 1 six times to completely fill a filling area of the printing layer with a molten material extruded from an extrusion outlet.

Due to existence of the hollow areas a, the printing layer becomes a printing layer with a complex shape. Certainly, a printing layer with a complex shape not only includes the printing layer shown in FIG. 1, but may also be in another form. A printing layer may be considered as a printing layer with a complex shape, provided that a filling area of the printing layer is discontinuous, or there is an isolated space in the filling area.

For example, the printing layer with a complex shape may be a filling area with a plurality of connected areas. Alternatively, the filling area of the printing layer with a complex shape may be an area with a structure having separated lanes, that is, along a single motion trajectory of the printing apparatus (for example, the motion trajectory may be a straight line), the filling area may have a plurality of partitions (the partitions may also be referred to filling lanes), and the plurality of partitions may be separated (or isolated) from each other.

In some embodiments, in one movement trajectory of the printing apparatus, a quantity of the plurality of partitions in the filling area may change. For example, in a part of an entire printing track, a plurality of partitions may be separated from each other, and in another part of the printing track, some or all of the plurality of partitions may form one partition. It should be understood that regardless of a partition formed by a plurality of partitions or each partition in the plurality of partitions, a single partition may refer to a single connected area, and a width of a contour line of a single partition may dynamically change along a printing direction (the printing direction y shown in FIG. 1).

The 3D print with a complex structure described in embodiments of the present application may refer to a 3D print including the foregoing printing layer with a complex shape. In addition, a 3D print with a complex structure may include one or more printing layers with complex shapes.

As previously described, for the printing layer shown in FIG. 1, the improved 3D printing apparatus in the related art still needs to perform reciprocating motion six times to completely fill the filling area of the printing layer. If the 3D print includes a plurality of printing layers with complex shapes, when the improved 3D printing apparatus is used to print the 3D print, its printing efficiency is still low and needs to be further improved.

In view of this, an embodiment of the present application provides a 3D printing apparatus. The following describes a 3D printing apparatus 2 in an embodiment of the present application in detail with reference to FIG. 2. It should be understood that the 3D printing apparatus mentioned in embodiments of the present application refers to an apparatus used for 3D printing. The 3D printing apparatus may refer to an entire 3D printing system, or may refer to some components in a 3D printing system. For example, the 3D printing apparatus may refer to a 3D printing head.

Refer to FIG. 2. The 3D printing apparatus 2 may include a material extrusion portion 3 and a switch assembly 4.

The material extrusion portion 3 includes a material accommodation chamber 31 and an extrusion outlet 32. The material accommodation chamber 31 may be provided with a material inlet 33. The material accommodation chamber 31 can receive a molten material through the material inlet 33 and is configured to accommodate the molten material. The extrusion outlet 32 is in communication with the material accommodation chamber 31, and the extrusion outlet 32 is configured to extrude the molten material in the material accommodation chamber 31 to a current printing layer.

The current printing layer may be located on a build platform (not shown in FIG. 2). The current printing layer in embodiments of the present application refers to a printing layer that is being printed during a process of printing a 3D print, and may be, for example, the printing layer with a complex shape as described above.

Still refer to FIG. 2. The switch assembly 4 is coupled to the extrusion outlet 32, to perform on-off control on an area at which the extrusion outlet 32 is located, so that a plurality of sub-extrusion outlets 34 with continuously adjustable widths forms in the area.

It should be understood that the switch assembly 4 is coupled to the extrusion outlet 32 in order to perform on-off control on the area at which the extrusion outlet 32 is located. The on-off control can be understood as blocking or enabling the extrusion of the molten material from a part of the area at which the extrusion outlet 32 is located, so that the area at which the extrusion outlet 32 is located is formed as a plurality of sub-extrusion outlets 34 with continuously adjustable widths. A specific position of a blocked part of area may be dynamically adjusted under the control of the switch assembly 4.

In other words, when the switch assembly 4 does not perform on-off control on the area at which the extrusion outlet 32 is located, that is, when the switch assembly 4 does not block the molten material from being extruded from the extrusion outlet 32, the extrusion outlet 32 may be in the form of a single extrusion outlet. The extrusion outlet 32 may be the extrusion outlet with a continuously adjustable width as described above. The extrusion outlet 32 may be used to complete, at one time, printing of a current printing layer that is formed as a single partition.

In some embodiments, the switch assembly 4 may also be understood as a shielding member capable of shielding the area at which the extrusion outlet 32 is located.

When the switch assembly 4 performs on-off control on the area at which the extrusion outlet 32 is located, that is, when the switch assembly 4 blocks the molten material from being extruded from a part of the area at which the extrusion outlet 32 is located, the extrusion outlet 32 is formed as a plurality of sub-extrusion outlets 34 and each sub-extrusion outlet has a continuously adjustable width. In view of this, the plurality of sub-extrusion outlets may be used to complete, at one time, printing of a current printing layer that includes a plurality of partitions.

It should be noted that the completing printing of the current printing layer at one time described in embodiments of the present application may mean that when the 3D printing apparatus performs filling and printing along a printing direction, the 3D printing apparatus only needs to carry out a single movement along a single direction to complete filling of the filling area of the current printing layer. For example, filling and printing of the current printing layer with a complex shape described above can be completed at one time by controlling the printing apparatus to carry out a single movement along a straight line direction.

The switch assembly coupled to the extrusion outlet is disposed for the 3D printing apparatus in this embodiment of the present application, on-off control is performed on the extrusion outlet by using the switch assembly, so that the extrusion outlet is formed as a plurality of sub-extrusion outlets with continuously adjustable widths, and the molten material may be caused to pass through the plurality of sub-extrusion outlets to fill and print the current printing layer including the plurality of partitions at one time, thereby improving printing efficiency while ensuring printing accuracy.

It can be learned from the foregoing description that, if the current printing layer is the printing layer with a complex shape described above, the current printing layer should include a plurality of partitions, and a width of a contour line of each of the plurality of partitions may change along the printing direction. During printing of the current printing layer, the plurality of sub-extrusion outlets 34 described above may be utilized to simultaneously print the plurality of partitions in the current printing layer. During a printing process, a width of each of the plurality of sub-extrusion outlets 34 may change with change of a contour line of a partition corresponding to the sub-extrusion outlet, so as to fill the molten material into the partitions corresponding to the respective sub-extrusion outlet at one time.

It can be learned from the above that when the current printing layer is the printing layer with a complex shape described above, the 3D printing apparatus in the embodiment of the present application can be used to complete the printing of the current printing layer at one time, with an obvious improvement in printing efficiency.

In this embodiment of the present application, there is no specific limitation on a structure of the extrusion outlet 32 and a coupling form of the switch assembly 4 and the extrusion outlet 32, provided that related arrangement of the switch assembly 4 and the extrusion outlet 32 may enable the switch assembly 4 to achieve on-off control on the area at which the extrusion outlet 32 is located.

In an implementation, as shown in FIG. 2 and FIG. 3, the extrusion outlet 32 may be an extrusion outlet formed of a gap between two movable blocks 321. The two movable blocks 321 may slide relative to each other along an x direction shown in FIG. 2 and FIG. 3, so that the gap between the two movable blocks 321 may change, to form an extrusion outlet 32 with a variable width.

Accordingly, the switch assembly 4 can be disposed to be coupled to the extrusion outlet 32 to control a part of an area of the extrusion outlet 32 to be blocked and the other part of the area to be unblocked, so that the extrusion outlet 32 is formed as a plurality of continuously adjustable sub-extrusion outlets 34. A part of the area that is blocked or unblocked may dynamically change under control of the switch assembly 4.

For example, as shown in FIG. 2 and FIG. 3, the switch assembly 4 may be disposed to include a plurality of slider switches (as shown by 41, 42, and 43 in FIG. 2 and FIG. 3) with variable widths and movable positions. The switch assembly 4 and the extrusion outlet 32 may be coupled in such a manner that each slider switch can be controlled by the switch assembly 4 to move, at any time and in any movement manner, to a corresponding position of the area at which the extrusion outlet 32 is located. For example, each slider switch may be disposed in the material accommodation chamber 31, and may be controlled by the switch assembly 4 to slide relatively along the x direction in FIG. 2 and FIG. 3 and/or move along a y direction in FIG. 2 and FIG. 3.

In FIG. 2, the switch assembly 4 may control the slider switches 42 and 43 to move to the area at which the extrusion outlet 32 is located, and control the slider switch 41 to move away from the area at which the extrusion outlet 32 is located, so that the extrusion outlet 32 can be divided into three sub-extrusion outlets 34 shown in FIG. 2. Because the slider switches 42 and 43 may also slide relatively along the x direction in FIG. 2, widths of the three sub-extrusion outlets 34 may be arbitrarily changed. Accordingly, a filling area in the current printing layer in this printing state may include three mutually separated partitions.

Similarly, in FIG. 3, the switch assembly 4 may control the slider switches 41, 42, and 43 to move to the area at which the extrusion outlet 32 is located, so that the extrusion outlet 32 is divided into four sub-extrusion outlets 34 shown in FIG. 3. A filling area in the current printing layer in this printing state may include four mutually separated partitions. FIG. 3 and FIG. 2 may show printing states of the printing apparatus 2 at different printing positions along the printing direction during printing of the current printing layer.

Through the foregoing coupling manner, the area at which the extrusion outlet is located may be formed as a plurality of sub-extrusion outlets 34 with discontinuously adjustable widths, and a quantity of the sub-extrusion outlets and a width of the sub-extrusion outlet can be controlled by the switch assembly 4 to flexibly change. In this way, the molten material may be caused to pass through the plurality of sub-extrusion outlets, to fill and print the current printing layer with a complex shape at one time, thereby improving printing efficiency while ensuring printing accuracy.

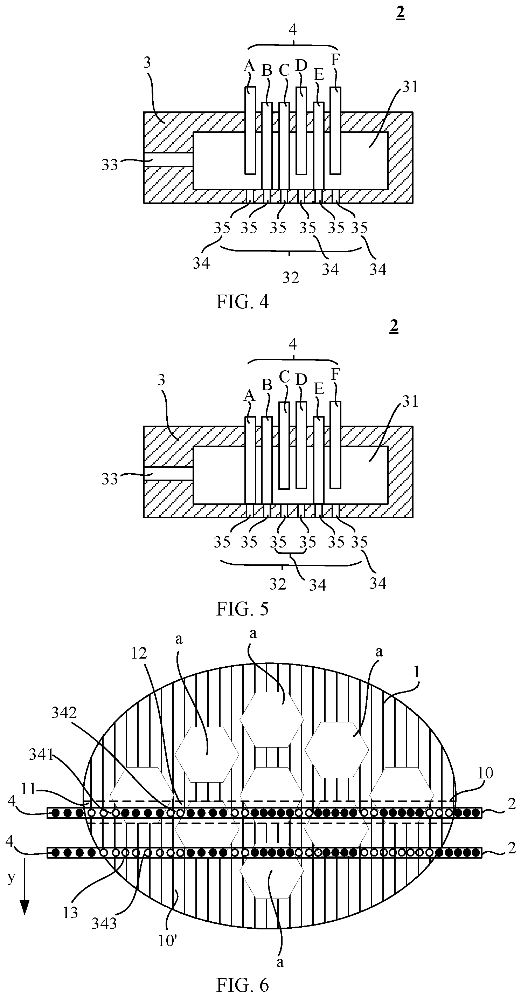

In another implementation, as shown in FIG. 4 and FIG. 5, the extrusion outlet 32 may include a plurality of channels 35. The plurality of channels 35 are in communication with the material accommodation chamber 31 for extruding the molten material to a current printing layer. The plurality of channels 35 may be closely arranged so that materials extruded from adjacent channels of the plurality of channels 35 are mutually fused together in the current printing layer. In other words, the extrusion outlet 32 is divided into a plurality of channels 35, for example, divided into a channel array having at least one row of channels 35, and the channels are separated by channel walls (or separator plates). The arrangement of the plurality of channels 35 allows molten materials extruded from the plurality of channels to flow by gravity to form a connected printing layer (or a coating) when they are coated on the build platform. Certainly, in some embodiments, an auxiliary means (such as mechanical rolling) may also be employed to ensure a fusion effect of the materials extruded from the plurality of channels 35.

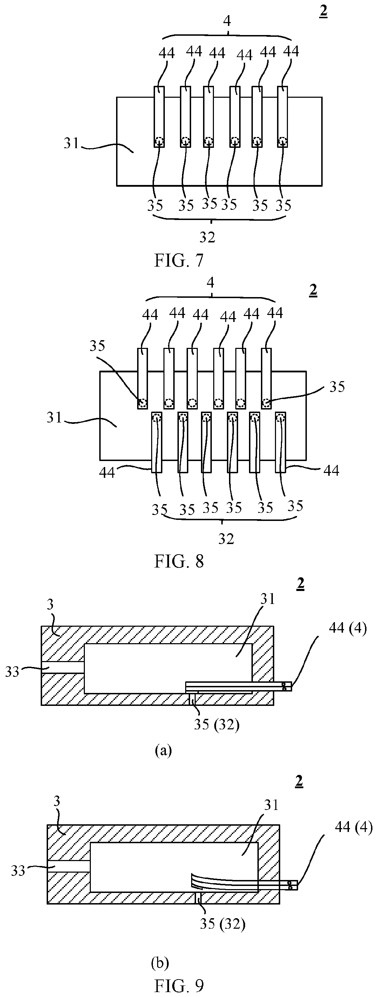

An arrangement manner of the plurality of channels 35 is not particularly limited in the present application, provided that materials extruded from the adjacent channels 35 can be fused together in the current printing layer. In some embodiments, as shown in FIG. 7, the plurality of channels 35 may be arranged in one row and closely adjacent to each other. In some other embodiments, as shown in FIG. 8, the plurality of closely arranged channels 35 may be arranged in a staggered manner and closely adjacent to each other, in order to effectively utilize an accommodation space.

Accordingly, the switch assembly 4 may be disposed to be coupled to the plurality of channels 35, to perform on-off control on the plurality of channels 35 to form a plurality of sub-extrusion outlets 34 with continuously adjustable widths. In other words, the switch assembly 4 can control some of the plurality of channels 35 to extrude the molten material, and the switch assembly can also control some of the plurality of channels 35 not to extrude the molten material. Mutually adjacent channels through which the molten material can be extruded may form one sub-extrusion outlet 34. Adjacent sub-extrusion outlets 34 may be separated therefrom by a channel 35 through which the molten material cannot be extruded. Whether each channel 35 of a plurality of channels 35 forming the extrusion outlet 32 can extrude the molten material may be dynamically changed under the control of the switch assembly 4.

For example, as shown in FIG. 4 and FIG. 5, a coupling manner thereof may be to arrange the switch assembly 4 to form a plurality of switches (A, B, C, D, E, and F shown in FIG. 4 and FIG. 5) in one-to-one correspondence with the plurality of channels 35, where each switch may independently control a corresponding channel.

In FIG. 4, the switch assembly 4 can control the switches A, D, and F to be open (that is, away from the channel 35), and control the other switches to be closed (that is, to abut against the channels 35), so that the plurality of channels 35 may be formed as three sub-extrusion outlets 34 shown in FIG. 4. Accordingly, a filling area in the current printing layer in this printing state may include three mutually separated partitions.

In FIG. 5, the switch assembly 4 may control the switches C, D, and F to be open, and control the other switches to be closed, so that the plurality of channels 35 may be formed as two sub-extrusion outlets 34 shown in FIG. 5. A filling area in the current printing layer in this printing state may include two mutually separated partitions. FIG. 4 and FIG. 5 may show printing states of the printing apparatus 2 at different printing positions along the printing direction during printing of the current printing layer.

In the above coupling manner, a part of the plurality of channels 35 that are formed as the extrusion outlets 32 can be controlled to or not to extrude the molten material, so that the plurality of channels 35 is allowed to be formed as a plurality of sub-extrusion outlets 34 with continuously adjustable widths. A quantity of the sub-extrusion outlets of the extrusion outlet 32 and a width of the sub-extrusion outlet can be controlled by the switch assembly 4 to change. In this way, the molten material may be caused to pass through the plurality of sub-extrusion outlets, to fill and print the current printing layer with a complex shape at one time, thereby improving printing efficiency while ensuring printing accuracy.

In addition, compared with the foregoing solution, this solution can avoid an uneven material flow rate caused by squeezing of the molten material due to a narrowed width of an extrusion position when widths of the extrusion outlet 32 and of each sub-extrusion outlet 34 are changed. This can effectively improve printing quality of a 3D print.

As previously described, a quantity of a plurality of partitions in a filling area corresponding to the current printing layer with a complex shape vary. For example, as shown in FIG. 1, a plurality of partitions in a current printing layer 1 include a first partition 11 and a second partition 12. In a partial filling area (a dashed area 10), the first partition 11 and the second partition 12 have mutually isolated areas; in a partial filling area (an area 10' below the dashed area 10), the first partition 11 and the second partition 12 have mutually connected areas. The dashed area 10 and the area 10' may be closely arranged along the printing direction y. In the area 10, the first partition 11 and the second partition 12 are isolated from each other, that is, the first partition 11 and the second partition 12 form a total of two partitions; in the area 10', the first partition 11 and the second partition 12 are merged into one partition 13.

Correspondingly, as shown in FIG. 6, the plurality of sub-extrusion outlets 34 in the 3D printing apparatus 2 in this embodiment of the present application may include a first sub-extrusion outlet 341 and a second sub-extrusion outlet 342. When the 3D printing apparatus 2 is used to print the area 10, on-off control of the switch assembly 4 causes the first sub-extrusion outlet 341 and the second sub-extrusion outlet 342 to be respectively used for printing the first partition 11 and the second partition 12 that are isolated from each other. During printing of the area 10 ', on-off control of the switch assembly 4 causes the first sub-extrusion outlet 341 and the second sub-extrusion outlet 342 to be merged into one sub-extrusion outlet 343, and the merged sub-extrusion outlet 343 may be used to print the partition 13 formed by merging of the first partition 11 and the second partition 12.

Different on-off control is performed by the switch assembly 4 on different filling areas of the current printing layer, so that the 3D printing apparatus can further complete printing of a more complex current printing layer at one time (for example, the current printing layer shown in FIG. 1 can be printed only by moving of the printing apparatus 2 once along the printing direction y), thereby effectively improving printing efficiency of a 3D print including such a printing layer.

As previously described, there may be a plurality of structural forms of the switch assembly 4, which is not particularly limited in embodiments of the present application.

In an implementation, as shown in FIG. 7 to FIG. 12, the switch assembly 4 may include a plurality of sheet switches 44. The plurality of sheet switches 44 may be changed in shape under the control of temperature and/or voltage, so as to perform on-off control on the area at which the extrusion outlet 32 is located (for example, the channels 35). For example, as shown in FIG. 7 and FIG. 8, a corresponding sheet switch 44 may be provided correspondingly to each channel 35, to individually control whether the molten material can be extruded from the corresponding channel 35 through shape change of the sheet switch. A width of the sheet switch 44 may usually be set to be greater than or equal to an aperture of the channel 35, so as to achieve a better blocking effect when the switch assembly 4 performs blocking control on each channel 35. Optionally, the plurality of sheet switches 44 may include one or more of the following: piezoelectric bimorphs, bimetallic strips, heat-expandable metal resistors, or memory alloys.

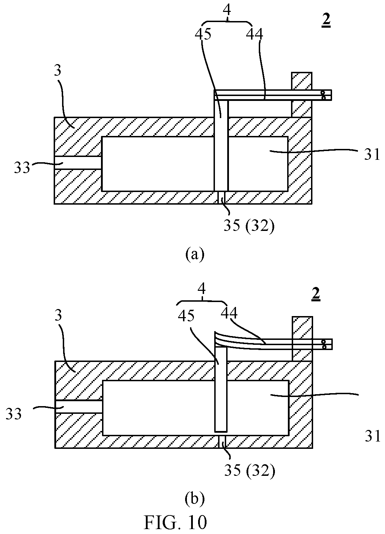

The following describes, with reference FIG. 9 to FIG. 11, arrangement manners of a switch assembly 4 including a plurality of sheet switches 44. It should be understood that only one sheet switch is used as an example in FIG. 9 and FIG. 10, and an arrangement manner of another sheet switch is the same as that shown in the figure.

As shown in FIG. 9, the sheet switch 44 may be disposed inside a material accommodation chamber 31, and disposed above an area at which an extrusion outlet 32 is located (for example, a channel 35). The sheet switch 44 may be fastened at one end in a cantilever manner, and the other end can be changed in shape under the control of temperature and/or voltage so as to abut against or move away from the area at which the extrusion outlet 32 is located.

For example, when the sheet switch 44 is a piezoelectric bimorph, an electric field direction of two sheets of piezoelectric crystal plates, which are placed one above the other, of the piezoelectric bimorph can be controlled so that when the piezoelectric bimorph is bent downward, the area at which the extrusion outlet 32 is located (for example, the channel 35) is closed (as shown in FIG. 9(a)); and under a reverse electric field, when the piezoelectric bimorph is bent upward, the area at which the extrusion outlet 32 is located (for example, the channel 35) is open (as shown in FIG. 9(b)).

Similarly, when the sheet switch 44 is a bimetallic strip, an active layer may be located below, and when being controlled to be in a lower temperature state, drive a passive layer to bend downward, and when being controlled to be in a higher temperature state, drive the passive layer to bend upward.

Alternatively, when the sheet switch 44 is a heat-expandable metal resistor or a memory alloy, it may be arranged in the manner described above. A difference lies in that the sheet switch 44 in such a form requires only one layer for achieving on-off control on the area at which the extrusion outlet 32 is located.

The memory alloy may also be referred to as a shape memory alloy. A shape memory alloy sheet may be in a straight state at a given temperature and in a downwardly curved state at another given temperature. Therefore, controlling the given temperature thereof can make the shape memory alloy sheet drive a transmission member to move up and down. In this embodiment of the present application, temperature of the memory alloy may be controlled in different manners. For example, the temperature may be controlled by applying electricity to the memory alloy, by using resistance heating, or by using radiation heating.

The heat-expandable metal resistor may also be referred to as a metal resistor sheet with a high thermal expansion coefficient. At room temperature, the heat-expandable metal resistor is in a straight state. When the heat-expandable metal resistor is heated by applying electricity, a thermal expansion effect may increase its length, thereby causing the metal resistor to bend downward. Therefore, controlling temperature of the heat-expandable metal resistor can cause it to drive a transmission member to move up or down.

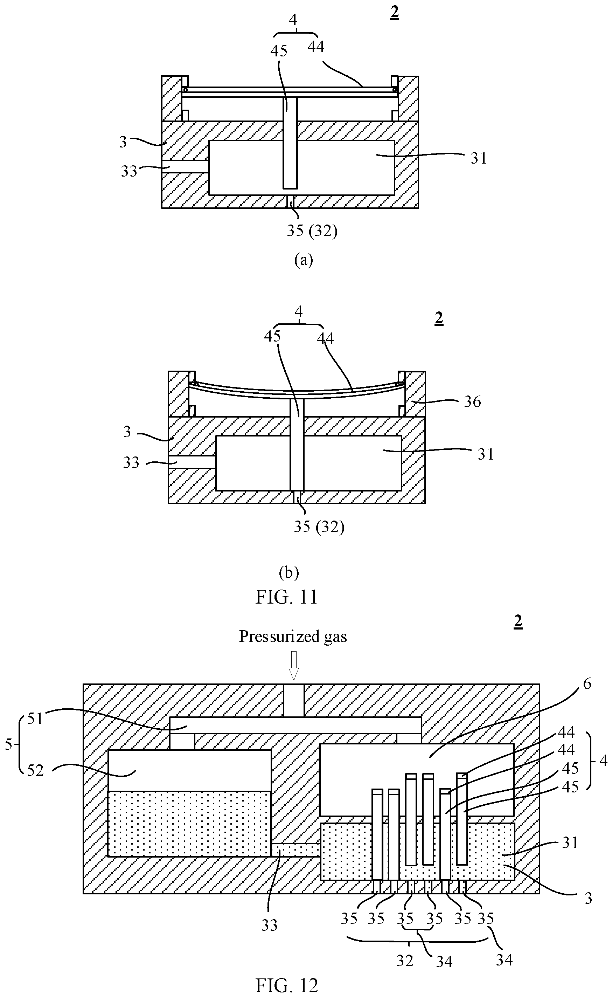

In some other embodiments, as shown in FIG. 10 and FIG. 11, the sheet switch 44 may be disposed outside a material accommodation chamber 31, the sheet switch 44 is connected to a transmission member 45 (it should be understood that a plurality of sheet switches may be connected to a plurality of transmission members 45 respectively), and on-off control is performed on the area at which the extrusion outlet 32 is located (for example, a plurality of channels 35) by using the transmission member 45.

The transmission member 45 may be a blocking block, which may be disposed above the area at which the extrusion outlet 32 is located, and may move up or down based on shape change of the sheet switch 44. One end of the transmission member 45 is fixedly connected to the sheet switch 44, and the other end may abut against or move away from the area at which the extrusion outlet 32 is located (for example, the channel 35). A shape and a material of the transmission member 45 are not particularly limit in embodiments of the present application. For example, the transmission member 45 may be a square or cylindrical blocking block, and its material may be metal, ceramic, or another material that can withstand high temperature and has sufficient strength.

A manner of fastening the sheet switch 44 outside the material accommodation chamber 31 is not particularly limited in embodiments of the present application. In an implementation, as shown in FIG. 10, the sheet switch 44 may be fastened outside the material accommodation chamber 31 in a cantilever manner. Specifically, one end thereof is fixed, and the other end is connected to the transmission member 45, and can be changed in shape under the control of temperature and/or voltage to drive the transmission member 45 to move up or down, so as to abut against or move away from the area at which the extrusion outlet 32 is located.

For example, when the sheet switch 44 is a piezoelectric bimorph or a bimetallic strip, an electric field direction of two sheets of piezoelectric crystal plates that are placed one above another or temperature of the bimetallic strip can be controlled so that when the piezoelectric bimorph or the bimetallic strip is caused to bend downward, the area at which the extrusion outlet 32 is located (for example, the channel 35) is closed (as shown in FIG. 10(a)); and when the piezoelectric bimorph or the bimetallic strip is caused to bend upward or is in a straight state, the area at which the extrusion outlet 32 is located (for example, the channel 35) is open (as shown in FIG. 10(b)).

Alternatively, the sheet switch 44 may similarly use a heat-expandable metal resistor or a memory alloy, and a fastening manner may be the same as that described above. A difference lies in that the sheet switch 44 in such a form requires only one sheet for achieving on-off control on the area at which the extrusion outlet 32 is located, thereby simplifying a structure of the sheet switch 44.

In another implementation, as shown in FIG. 11, the sheet switch 44 may be fastened outside the material accommodation chamber 31 with both ends being fastened. For example, both ends of the sheet switch 44 may be fixed on a bracket 36 outside the material accommodation chamber. The transmission member 45 may be located at any position between both ends of the sheet switch 44. The sheet switch 44 can be changed in shape under the control of temperature and/or voltage to drive the transmission member 45 to move up or down, so as to abut against or move away from the area at which the extrusion outlet 32 is located.

For example, when the sheet switch 44 is a piezoelectric bimorph or a bimetallic strip, an electric field direction of two sheets of piezoelectric crystal plates that are placed one above another or temperature of the bimetallic strip can be controlled so that when the piezoelectric bimorph or the bimetallic strip is caused to bend downward, the area at which the extrusion outlet 32 is located (for example, the channel 35) is closed (as shown in FIG. 11(a)); and when the piezoelectric bimorph or the bimetallic strip is caused to bend upward or is in a straight state, the area at which the extrusion outlet 32 is located (for example, the channel 35) is open (as shown in FIG. 11(b)).

Alternatively, the sheet switch 44 may similarly use a heat-expandable metal resistor or a memory alloy, and a fastening manner may be the same as that described above. A difference lies in that the sheet switch 44 in such a form requires only one sheet.

The sheet switch 44 is disposed outside the material accommodation chamber 31, so that impact of voltage or temperature in controlling the sheet switch 44 on the molten material in the material accommodation chamber 31 can be isolated, so as to control temperature of the molten material and the sheet switch more accurately.

In some embodiments, as shown in FIG. 12, the 3D printing apparatus 2 may further include a feeding system 5. The feeding system 5 is in communication with the material accommodation chamber 31 through a material inlet 33, and is configured to heat the molten material and convey the molten material to the material accommodation chamber 31. The feeding system 23 may be, for example, a stepless variable-flow feeding apparatus. However, a form of the feeding system 23 is not particularly limited in embodiments of the present application. For example, the feeding system 5 may be a screw feeding system, a pneumatic feeding system, or a piston feeding system.

When the feeding system 5 is a pneumatic feeding system, as shown in FIG. 12, it is usually necessary to provide the pneumatic feeding system 5 with a pneumatic conveying pipeline 51 and a material storage box 52 connected to the pneumatic conveying pipeline 51.

In view of this, the material accommodation chamber 31 is also subject to pressure formed by pressurized gas described above. This pressure may have specific impact on movement of the transmission member 45. For example, when the sheet switch 44 is located outside the material accommodation chamber 31, the sheet switch 44 may drive the transmission member 45 to move downward to close a corresponding area of a extrusion outlet 32 (for example, the channel 35). This pressure may generate upward resistance for the transmission member 45, which may require the switch assembly 4 to apply a larger force to the transmission member 45 to achieve closure, thereby causing specific difficulty in on-off control by the switch assembly 4.

To resolve the foregoing problem, as shown in FIG. 12, the 3D printing apparatus 2 in this embodiment of the present application further includes a control chamber 6. The plurality of sheet switches 44 are located inside the control chamber 6, and the pneumatic conveying pipeline 51 may be disposed to be in gas communication with the control chamber 6. Through this arrangement, the pressure of the pressurized gas may also act on a space in which the sheet switch 44 and the transmission member 45 are located, thereby forming a pressure balance with the pressure for extruding molten material. In this way, when the sheet switch 44 drives the transmission member 45 to move up and down to achieve the on-off control of the switch assembly 4, impact from a force of squeezing the molten material may be avoided, thereby ensuring control accuracy and reducing power consumption of the on-off control.

It should be noted that the foregoing description is based on an example in which the 3D printing apparatus 2 uses the pneumatic feeding system 5. However, embodiments of the present application are not limited thereto, provided that a pneumatic conveying pipeline 51 can be used to form an air pressure balance between the material storage box 52 and the control chamber 6. For example, the 3D printing apparatus 2 may still use other feeding manners such as a screw, and then, a pneumatic conveying pipeline 51 can be introduced to connect the material storage box 52 on a feeding route and the control chamber 6 in which the switch assembly is located, so that an air pressure balance is formed between them, thereby reducing difficulty and power consumption of on-off control of the switch assembly in the control chamber 6.

It can be understood that the switch assembly 4 is not limited to a structure that includes a sheet switch 44 in embodiments of the present application, and the switch assembly 4 may alternatively be in another structural form. For example, the switch assembly 4 may include one or more of the following switches: a motor-controlled switch, a pneumatic-controlled switch, or a hydraulic-controlled switch.

The motor-controlled switch may be a motor shaft of a motor, or a transmission member driven by a motor shaft of a motor. Because the motor shaft may perform linear motion when the motor is energized, the motor shaft or the transmission member can be controlled to abut against or move away from the area at which the extrusion outlet 32 is located only by controlling the motor to rotate clockwise or counterclockwise. This manner is particularly suitable for on-off control of the extrusion outlet 32 including a plurality of channels 35, especially when the channels 35 have larger apertures and a smaller quantity of holes.

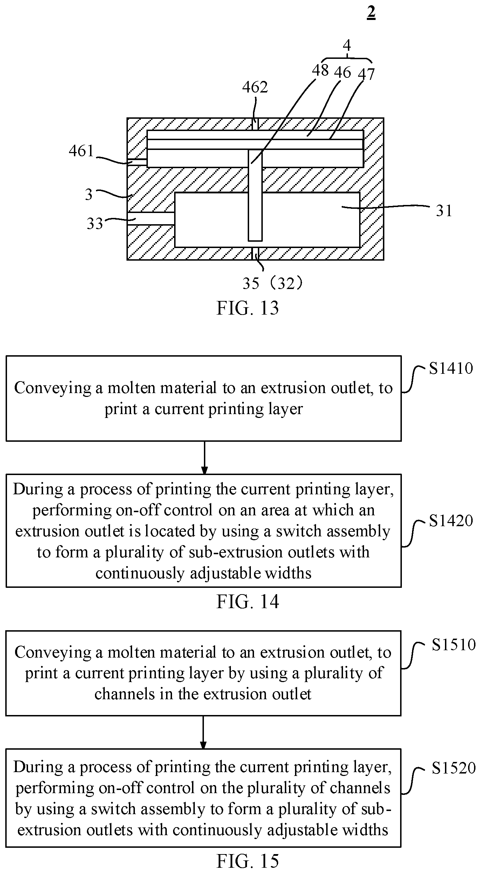

The pneumatic-controlled or hydraulic-controlled switch may be a pneumatic-controlled or hydraulic-controlled piston, or a transmission member driven by a piston. FIG. 13 shows a possible implementation in which the switch assembly 4 includes a pneumatic-controlled or hydraulic-controlled switch. It should be understood that one pneumatic-controlled or hydraulic-controlled switch included in the switch assembly is merely used as an example in FIG. 13, and an arrangement manner of another pneumatic-controlled or hydraulic-controlled switch is the same as or similar to that shown in the figure.

With reference to FIG. 13, the switch assembly 4 may include a chamber 46 and a piston 47. The chamber 46 is located above a material accommodation chamber 31, and may be provided with a first interface 461 and a second interface 462 connected to the outside, for example, connected to a pneumatic apparatus or a hydraulic apparatus. The piston 47 is located in the chamber 46. When the first interface is an inlet and the second interface is an outlet, the piston 47 may move upward, or when the first interface is an outlet and the second interface is an inlet, the piston may move downward, to perform on-off control on the area at which the extrusion outlet 32 is located. It can be understood that pressure at the inlet is greater than pressure at the outlet. In some embodiments, a transmission member 48 may be further disposed below the piston 47. When the piston 47 moves up or down, the transmission member 48 may be driven to move up or down together to achieve on-off control. Certainly, the transmission member 48 may be a part of the piston 47, that is, the transmission member 48 and the piston 47 are integrated. Presence or absence of the transmission member 48 is not limited in this embodiment of the present application, provided that up or down movement of the piston 47 can achieve on-off control of the switch assembly 4.

In some embodiments, the plurality of channels mentioned above and the plurality of switches in one-to-one correspondence with the plurality of channels may be replaced by a plurality of print heads, and the plurality of print heads may be closely arranged to achieve the function mentioned above.

Embodiments of the 3D printing apparatus in the present application are described above in detail with reference to FIG. 1 to FIG. 13. The following describes embodiments of a method in the present application with reference to FIG. 14 and FIG. 15. It should be understood that the method may be performed by the 3D printing apparatus mentioned above, and therefore, for the parts not described in detail, reference may be made to the foregoing descriptions.

Refer to FIG. 14. A 3D printing method provided in an embodiment of the present application may include step S1410 and step S1420.

S1410: Conveying a molten material to an extrusion outlet, to print a current printing layer.

Step S1420: During a process of printing the current printing layer, performing on-off control on an area at which an extrusion outlet is located by using a switch assembly to form a plurality of sub-extrusion outlets with continuously adjustable widths.

Optionally, the plurality of sub-extrusion outlets are configured to simultaneously print a plurality of partitions in the current printing layer, and in a process of printing the plurality of partitions by using the plurality of sub-extrusion outlets, a width of each of the plurality of sub-extrusion outlets is changed with change of a contour line of a partition corresponding to the sub-extrusion outlet, so that the molten material is filled into the partition corresponding to the sub-extrusion outlet at one time.

Optionally, the plurality of partitions include a first partition and a second partition, the plurality of sub-extrusion outlets include a first sub-extrusion outlet and a second sub-extrusion outlet, and the method shown in FIG. 14 further includes: printing the first partition and the second partition by using the first sub-extrusion outlet and the second sub-extrusion outlet, respectively, where the first partition and the second partition have mutually isolated areas and mutually connected areas, and during printing of the mutually connected areas, the on-off control causes the first sub-extrusion outlet and the second sub-extrusion outlet to be merged into one sub-extrusion outlet.

Optionally, the switch assembly includes a plurality of sheet switches, and the method shown in FIG. 14 further includes: utilizing shape changes of the plurality of sheet switches under the control of temperature and/or voltage, to perform the on-off control on the area at which the extrusion outlet is located.

Optionally, the plurality of sheet switches are disposed inside a material accommodation chamber, and disposed above the area at which the extrusion outlet is located.

Optionally, the plurality of sheet switches are disposed outside a material accommodation chamber, the plurality of sheet switches are connected to a plurality of transmission members, respectively, and the on-off control is performed on the area at which the extrusion outlet is located by using the plurality of transmission members.

Optionally, the method shown in FIG. 14 further includes: conveying pressurized gas to a control chamber and a material storage box by using a pneumatic conveying pipeline, where the plurality of sheet switches are located inside the control chamber, and the material storage box is in communication with the material accommodation chamber of the material extrusion portion.

Optionally, the plurality of sheet switches includes one or more of the following: piezoelectric bimorphs, bimetallic strips, heat-expandable metal resistors, or memory alloys.

Optionally, the switch assembly includes one or more of the following switches: a motor-controlled switch, a pneumatic-controlled switch, or a hydraulic-controlled switch.

Refer to FIG. 15. Another 3D printing method provided in an embodiment of the present application may include step S1510 and step S1520.

Step S1510: Conveying a molten material to an extrusion outlet, to print a current printing layer by using a plurality of channels in the extrusion outlet, where materials extruded from adjacent channels in the plurality of channels are fused together on the current printing layer.

Step S1520: During a process of printing the current printing layer, performing on-off control on the plurality of channels by using a switch assembly to form a plurality of sub-extrusion outlets with continuously adjustable widths.

Optionally, during a process of printing the current printing layer, the plurality of sub-extrusion outlets are utilized to simultaneously print a plurality of partitions in the current printing layer, and a width of each of the plurality of sub-extrusion outlets is changed with change of a contour line of a partition corresponding to the sub-extrusion outlet, so that the molten material is filled in the partition corresponding to the sub-extrusion outlet at one time.

Optionally, the plurality of partitions include a first partition and a second partition, the plurality of sub-extrusion outlets include a first sub-extrusion outlet and a second sub-extrusion outlet, and the method shown in FIG. 15 further includes: printing the first partition and the second partition by using the first sub-extrusion outlet and the second sub-extrusion outlet, respectively, where the first partition and the second partition have mutually isolated areas and mutually connected areas, and during printing of the mutually connected areas, the on-off control by the switch assembly causes the first sub-extrusion outlet and the second sub-extrusion outlet to be merged into one sub-extrusion outlet.

Optionally, the switch assembly includes a plurality of sheet switches in one-to-one correspondence with the plurality of channels, and the method shown in FIG. 15 further includes: utilizing shape changes of the plurality of sheet switches under the control of temperature and/or voltage, to perform the on-off control on the plurality of channels.

Optionally, the plurality of sheet switches are disposed inside the material accommodation chamber, and disposed above the plurality of channels.

Optionally, the plurality of sheet switches are disposed outside a material accommodation chamber, the plurality of sheet switches are connected to a plurality of transmission members, respectively, and the on-off control is performed on the plurality of channels by using the plurality of transmission members.

Optionally, the method shown in FIG. 15 further includes: conveying pressurized gas to a control chamber and a material storage box by using a pneumatic conveying pipeline, where the plurality of sheet switches are located inside the control chamber, and the material storage box is in communication with the material accommodation chamber of the material extrusion portion.

Optionally, the plurality of channels are arranged in a staggered manner.

Optionally, the plurality of sheet switches includes one or more of the following: piezoelectric bimorphs, bimetallic strips, heat-expandable metal resistors, or memory alloys.

Optionally, the switch assembly includes one or more of the following switches: a motor-controlled switch, a pneumatic-controlled switch, or a hydraulic-controlled switch.

A person of ordinary skill in the art may be aware that units and algorithm steps in the examples as described with reference to embodiments disclosed in this specification may be implemented by electronic hardware or a combination of computer software and electronic hardware. Whether the functions are embodied by hardware or software depends on particular applications and design constraints of the technical solutions. A person skilled in the art may use different methods for each particular application in order to implement the described functions, but it should not be considered that the implementation goes beyond the scope of the present application.

**In** several embodiments provided in the present application, it should be understood that, the disclosed system may be implemented in other manners. For example, the described apparatus embodiments are merely examples. For example, the unit division as described is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or other forms.

The units described as separate components may be or may not be physically separated, and the components displayed as a unit may be or may not be physical units, that is, may be located in one place or distributed on a plurality of network units. Some or all of the units may be selected according to actual requirements to achieve the objectives of the solutions of embodiments.

**In** addition, functional units in embodiments of the present application may be integrated into one processing unit, each of the units may exist alone physically, or two or more units may be integrated into one unit.

The foregoing descriptions are merely particular implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A 3D printing apparatus, wherein the apparatus comprises:
a material extrusion portion, comprising a material accommodation chamber and an extrusion outlet in communication with the material accommodation chamber, wherein the material accommodation chamber is configured to accommodate a molten material, and the extrusion outlet is configured to extrude the molten material to a current printing layer; and
a switch assembly, coupled to the extrusion outlet, wherein the switch assembly is configured to perform on-off control on an area at which the extrusion outlet is located to form a plurality of sub-extrusion outlets with continuously adjustable widths, the plurality of sub-extrusion outlets are configured to simultaneously print a plurality of partitions in the current printing layer, and in a process of printing the plurality of partitions by using the plurality of sub-extrusion outlets, a width of each of the plurality of sub-extrusion outlets is changed with change of a contour line of a partition corresponding to the sub-extrusion outlet, so that the molten material is filled into the partition corresponding to the sub-extrusion outlet at one time.

2. The apparatus according to claim 1, wherein the plurality of partitions comprise a first partition and a second partition, the plurality of sub-extrusion outlets comprise a first sub-extrusion outlet and a second sub-extrusion outlet, the first sub-extrusion outlet and the second sub-extrusion outlet are configured to print the first partition and the second partition, respectively, the first partition and the second partition have mutually isolated areas and mutually connected areas, and during printing of the mutually connected areas, the on-off control by the switch assembly causes the first sub-extrusion outlet and the second sub-extrusion outlet to be merged into one sub-extrusion outlet.

3. The apparatus according to claim 1, wherein the switch assembly comprises a plurality of sheet switches, and the plurality of sheet switches are changed in shape under the control of temperature and/or voltage, to perform the on-off control on the area at which the extrusion outlet is located.

4. The apparatus according to claim 3, wherein the plurality of sheet switches are disposed inside the material accommodation chamber, and disposed above the area at which the extrusion outlet is located.

5. The apparatus according to claim 3, wherein the plurality of sheet switches are disposed outside the material accommodation chamber, the plurality of sheet switches are respectively connected to a plurality of transmission members, and the on-off control is performed on the area at which the extrusion outlet is located by using the plurality of transmission members.

6. The apparatus according to claim 5, wherein the apparatus further comprises:
a control chamber, wherein the plurality of sheet switches are located inside the control chamber;
a material storage box, in communication with the material accommodation chamber of the material extrusion portion; and
a pneumatic conveying pipeline, in communication with both the material storage box and the control chamber.

7. The apparatus according to claim 3, wherein the plurality of sheet switches comprises one or more of following: piezoelectric bimorphs, bimetallic strips, heat-expandable metal resistors, or memory alloys.

8. The apparatus according to claim 1, wherein the switch assembly comprises one or more of following switches: a motor-controlled switch, a pneumatic-controlled switch, or a hydraulic-controlled switch.

9. A 3D printing apparatus, comprising:
a material extrusion portion, comprising a material accommodation chamber and an extrusion outlet, wherein the material accommodation chamber is configured to accommodate a molten material, the extrusion outlet comprises a plurality of channels in communication with the material accommodation chamber, the plurality of channels are configured to extrude the molten material to a current printing layer, and materials extruded from adjacent channels in the plurality of channels are fused together in the current printing layer; and
a switch assembly, coupled to the plurality of channels, wherein the switch assembly is configured to perform on-off control on the plurality of channels to form a plurality of sub-extrusion outlets with continuously adjustable widths.

10. The apparatus according to claim 9, wherein the plurality of sub-extrusion outlets are configured to simultaneously print a plurality of partitions in the current printing layer, and in a process of printing the plurality of partitions by using the plurality of sub-extrusion outlets, a width of each of the plurality of sub-extrusion outlets is changed with change of a contour line of a partition corresponding to the sub-extrusion outlet, so that the molten material is filled into the partition corresponding to the sub-extrusion outlet at one time.

11. The apparatus according to claim 10, wherein the plurality of partitions comprise a first partition and a second partition, the plurality of sub-extrusion outlets comprise a first sub-extrusion outlet and a second sub-extrusion outlet, the first sub-extrusion outlet and the second sub-extrusion outlet are configured to print the first partition and the second partition, respectively, the first partition and the second partition have mutually isolated areas and mutually connected areas, and during printing of the mutually connected areas, the on-off control by the switch assembly causes the first sub-extrusion outlet and the second sub-extrusion outlet to be merged into one sub-extrusion outlet.

12. The apparatus according to claim 9, wherein the switch assembly comprises a plurality of sheet switches in one-to-one correspondence with the plurality of channels, and the plurality of sheet switches are changed in shape under the control of temperature and/or voltage, to perform the on-off control on the plurality of channels.

13. The apparatus according to claim 12, wherein the plurality of sheet switches are disposed inside the material accommodation chamber, and disposed above the plurality of channels.

14. The apparatus according to claim 12, wherein the plurality of sheet switches are disposed outside the material accommodation chamber, the plurality of sheet switches are respectively connected to a plurality of transmission members, and the on-off control is performed on the plurality of channels by using the plurality of transmission members.

15. The apparatus according to claim 12, wherein the apparatus further comprises:
a control chamber, wherein the plurality of sheet switches are located inside the control chamber;
a material storage box, in communication with the material accommodation chamber of the material extrusion portion; and
a pneumatic conveying pipeline, in communication with both the material storage box and the control chamber.

16. The apparatus according to claim 9, wherein the plurality of channels are arranged in a staggered manner.

17. The apparatus according to claim 12, wherein the plurality of sheet switches comprises one or more of following: piezoelectric bimorphs, bimetallic strips, heat-expandable metal resistors, or memory alloys.

18. The apparatus according to claim 9, wherein the switch assembly comprises one or more of following switches: a motor-controlled switch, a pneumatic-controlled switch, or a hydraulic-controlled switch.

19. A 3D printing method, wherein the method comprises:
conveying a molten material to an extrusion outlet, to print a current printing layer; and
during a process of printing the current printing layer, performing on-off control on an area at which the extrusion outlet is located by using a switch assembly, to form a plurality of sub-extrusion outlets with continuously adjustable widths, the plurality of sub-extrusion outlets are configured to simultaneously print a plurality of partitions in the current printing layer, and in a process of printing the plurality of partitions by using the plurality of sub-extrusion outlets, a width of each of the plurality of sub-extrusion outlets is changed with change of a contour line of a partition corresponding to the sub-extrusion outlet, so that the molten material is filled into the partition corresponding to the sub-extrusion outlet at one time.

20. The method according to claim 1, wherein the plurality of partitions comprise a first partition and a second partition, the plurality of sub-extrusion outlets comprise a first sub-extrusion outlet and a second sub-extrusion outlet, and the method comprises:
printing the first partition and the second partition by using the first sub-extrusion outlet and the second sub-extrusion outlet, respectively, wherein the first partition and the second partition have mutually isolated areas and mutually connected areas, and during printing of the mutually connected areas, the on-off control causes the first sub-extrusion outlet and the second sub-extrusion outlet to be merged into one sub-extrusion outlet.

21. The method according to claim 19, wherein the switch assembly comprises a plurality of sheet switches, and the method comprises:
utilizing shape changes of the plurality of sheet switches under the control of temperature and/or voltage, to perform the on-off control on the area at which the extrusion outlet is located.

22. The method according to claim 21, wherein the plurality of sheet switches are disposed inside a material accommodation chamber, and disposed above the area at which the extrusion outlet is located.

23. The method according to claim 21, wherein the plurality of sheet switches are disposed outside a material accommodation chamber, the plurality of sheet switches are respectively connected to a plurality of transmission members, and the on-off control is performed on the area at which the extrusion outlet is located by using the plurality of transmission members.

24. The method according to claim 23, further comprising:
conveying pressurized gas to a control chamber and a material storage box by using a pneumatic conveying pipeline, wherein the plurality of sheet switches are located inside the control chamber, and the material storage box is in communication with the material accommodation chamber of the material extrusion portion.

25. The method according to claim 21, wherein the plurality of sheet switches comprises one or more of following: piezoelectric bimorphs, bimetallic strips, heat-expandable metal resistors, or memory alloys.

26. The method according to claim 19, wherein the switch assembly comprises one or more of following switches: a motor-controlled switch, a pneumatic-controlled switch, or a hydraulic-controlled switch.

27. A 3D printing method, comprising:
conveying a molten material to an extrusion outlet, to print a current printing layer by using a plurality of channels in the extrusion outlet, wherein materials extruded from adjacent channels in the plurality of channels are fused together in the current printing layer; and
during a process of printing the current printing layer, performing on-off control on the plurality of channels by using a switch assembly to form a plurality of sub-extrusion outlets with continuously adjustable widths.

28. The method according to claim 27, wherein during the process of printing the current printing layer, the plurality of sub-extrusion outlets are utilized to simultaneously print a plurality of partitions in the current printing layer, and a width of each of the plurality of sub-extrusion outlets is changed with change of a contour line of a partition corresponding to the sub-extrusion outlet, so that the molten material is filled into the partition corresponding to the sub-extrusion outlet at one time.

29. The method according to claim 27, wherein the plurality of partitions comprise a first partition and a second partition, the plurality of sub-extrusion outlets comprise a first sub-extrusion outlet and a second sub-extrusion outlet, and the method comprises:
printing the first partition and the second partition by using the first sub-extrusion outlet and the second sub-extrusion outlet, respectively, wherein the first partition and the second partition have mutually isolated areas and mutually connected areas, and during printing of the mutually connected areas, the on-off control by the switch assembly causes the first sub-extrusion outlet and the second sub-extrusion outlet to be merged into one sub-extrusion outlet.

30. The method according to claim 27, wherein the switch assembly comprises a plurality of sheet switches in one-to-one correspondence with the plurality of channels, and the method comprises:
utilizing shape changes of the plurality of sheet switches under the control of temperature and/or voltage, to perform the on-off control on the plurality of channels.

31. The method according to claim 30, wherein the plurality of sheet switches are disposed inside a material accommodation chamber, and disposed above the plurality of channels.

32. The method according to claim 30, wherein the plurality of sheet switches are disposed outside a material accommodation chamber, the plurality of sheet switches are respectively connected to a plurality of transmission members, and the on-off control is performed on the plurality of channels by using the plurality of transmission members.

33. The method according to claim 32, wherein the method further comprises:
conveying pressurized gas to a control chamber and a material storage box by using a pneumatic conveying pipeline, wherein the plurality of sheet switches are located inside the control chamber, and the material storage box is in communication with the material accommodation chamber of the material extrusion portion.

34. The method according to claim 27, wherein the plurality of channels are arranged in a staggered manner.

35. The method according to claim 30, wherein the plurality of sheet switches comprises one or more of following: piezoelectric bimorphs, bimetallic strips, heat-expandable metal resistors, or memory alloys.

36. The method according to claim 27, wherein the switch assembly comprises one or more of following switches: a motor-controlled switch, a pneumatic-controlled switch, or a hydraulic-controlled switch.
